# EUROPEAN PATENT APPLICATION

(11) **EP 1 535 972 A1**
(43) Date of publication of application: **01.06.2005**
(21) Application number: 04025734.7
(22) Date of filing: 29.10.2004
(51) Int. Cl.: C09D 4/00, C08G 18/28, C08J 3/24

(54) **Process for multi-layer coating of substrates, comprising dual curing at least one layer thermally and by moisture**

(30) Priority: 25.11.2003 US 722796
(71) Applicant: E.I. du Pont de Nemours and Company, Wilmington, DE 19898 (US)
(72) Inventor: Phui, Qui Nguyen, 41069 Moenchengladbach (DE); Wulf, Martin, 40764 Langenfeld (DE); Taennert, Klaus, 42389 Wuppertal (DE)
(74) Representative: DuPont Performance Coatings Biering/Blum/Kimpel

(57) **Abstract**

The invention relates to a process for multi-layer coating of substrates, in particular vehicles and vehicle parts, by applying two or more coating layers and curing of the applied coatings, wherein at least one of the coating layers is produced from a coating composition which comprises a binder system with free-radically polymerizable olefinic double bonds and with hydrolysable alkoxysilane groups, wherein the resin solids content of the coating composition exhibits an equivalent weight of C=C double bonds of 200 - 2000, preferably of 300 - 1500, and a content of silicon bound in alkoxysilane groups of 1 - 10 wt-%, preferably of 1 - 7 wt-%, especially preferably of 2 - 6 wt-%, and wherein curing of the coating layer, of which there is at least one, proceeds by free-radical polymerization of the C=C double bonds under the action of thermal energy and by the formation of siloxane bridges under the action of moisture.

## Description

### Field of the Invention

The invention relates to a process for the multi-layer coating of substrates, in particular vehicles and vehicle parts, wherein curing of at least one of the layers of the multi-layer structure, preferably the outer layer, is performed with thermal energy and by means of moisture.

### Description of Related Art

Various dual cure systems are known in coatings technology which combine curing by means of high energy radiation, in particular by means of UV radiation, with moisture curing. Such systems generally comprise organopolysiloxane binders which contain both hydrolysable silane groups and free-radically polymerizable, olefinically unsaturated groups. WO 99/67318, for example, describes a binder system based on two differently functionalized polysiloxanes, wherein one polysiloxane comprises (meth)acryloyl groups and the second polysiloxane comprises ethylenically unsaturated groups and hydrolysable silane groups. This binder system is used in potting applications and in coating compositions for electronic components and electronic circuits.

A general drawback of coating agents which are at least partially cured by means of UV radiation is that coatings made of these coating agents which necessarily contain photoinitiators for radical polymerization tend to yellow after UV irradiation. This is an obstacle to the use of UV-curable coating agents, in particular, as a clear coat. Moreover, UV-curable coatings shrink in volume owing to the very fast curing, and fissures may occur in the film.

There is a requirement when coating vehicles and vehicle parts for multi-layer coating processes using curable coating compositions, in particular coating compositions for producing the outer layer of a multi-layer coating, with which processes coatings are obtained which have an elevated level of hardness, scratch resistance and good chemical resistance. The coatings obtained should be resistant to yellowing, tend not to form fissures and be thermally curable in relatively short times.

### Summary of the Invention

The invention relates to a process for the multi-layer coating of substrates, in particular, vehicles and vehicle parts, by the application of two or more coating layers and curing of the applied coatings, wherein at least one of the coating layers is produced from a coating composition which comprises a binder system with free-radically polymerizable olefinic double bonds and with hydrolysable alkoxysilane groups, wherein the resin solids content of the coating composition exhibits an equivalent weight of C=C double bonds of 200 - 2000, preferably of 300 - 1500, and a content of silicon bound in alkoxysilane groups of 1 - 10 wt-%, preferably of 1 - 7 wt-%, especially preferably of 2 - 6 wt-%, and wherein curing of the coating layer, of which there is at least one, proceeds by free-radical polymerization of the C=C double bonds under the action of thermal energy and by the formation of siloxane bridges under the action of moisture.

The invention preferably relates to a process for the multi-layer coating of substrates, in particular vehicles and vehicle parts, by applying two or more coating layers and curing of the applied coatings, wherein the outer layer of the multi-layer structure is prepared from a coating composition which comprises a binder system with free-radically polymerizable olefinic double bonds and with hydrolysable alkoxysilane groups, wherein the resin solids content of the coating composition exhibits an equivalent weight of C=C double bonds of 200 - 2000, preferably of 300 - 1500, and a content of silicon bound in alkoxysilane groups of 1 - 10 wt-%, preferably of 1 - 7 wt-%, especially preferably of 2 - 6 wt-%, and wherein curing of the coating layer, of which there is at least one, proceeds by free-radical polymerization under the action of thermal energy and by the formation of siloxane bridges under the action of moisture.

### Detailed Description of the Embodiments

The resin solids content of the coating compositions curable by means of thermal energy and by means of moisture includes the binder system with free-radically polymerizable olefinic double bonds and with hydrolysable alkoxysilane groups, together with any optionally present reactive diluents.

The outer layer of the multi-layer structure may comprise a clear coat layer applied onto a color-imparting and/or special effect-imparting base coat layer or a pigmented one-layer top coat layer applied onto a prior coating. It may also comprise a transparent sealing layer which is applied, for example, onto the outer coating layer of a multi-layer coating, in particular, onto a clear coat layer or a pigmented one-layer top coat layer, in order to achieve particular scratch resistance.

It has surprisingly been found that it is possible by means of the process, according to the invention, to produce clear coat layers or one-layer top coat layers and sealing layers which, in addition to adequate hardness, also exhibit elevated cross-linking and chemical resistance, wherein these properties can be achieved within relatively short curing times. The clear coat layers do not show yellowing.

The coating compositions curable by means of thermal energy and by means of moisture used in the process, according to the invention, contain binders with free-radically polymerizable olefinic double bonds and with hydrolysable alkoxysilane groups. The free-radically polymerizable olefinic double bonds and the hydrolysable alkoxysilane groups may here in principle be present in the same binder and/or in separate binders.

The coating compositions used in the process according to the invention cure by means of two different cross-linking mechanisms. Cross-linking proceeds, on the one hand, by means of free-radical polymerization of olefinic double bonds and, on the other, by means of the hydrolysis and subsequent condensation of alkoxysilane groups to form siloxane bridges. The radical polymerization is effected exclusively by the action of thermal energy, and thermal initiators are used. Irradiation with high-energy radiation, such as, UV radiation or electron radiation does not take place.

Suitable binders with free-radically polymerizable olefinic double bonds which may be considered are, for example, any binders known to the skilled person which can be cross-linked by free-radical polymerization. These binders are prepolymers, such as, polymers and oligomers, containing, per molecule, one or more, for example, on average 1 to 20, preferably 2-10, particularly preferably 2-6 free-radically polymerizable olefinic double bonds.

The polymerizable double bonds may, for example, be present in the form of (meth)acryloyl, vinyl, allyl, maleate and/or fumarate groups. (Meth)acryloyl groups are preferred. Both here and below, (meth)acryloyl and (meth)acrylic are respectively intended to mean acryloyl and/or methacryloyl and acrylic and/or methacrylic.

Examples of prepolymers or oligomers include (meth)acryloylfunctional poly(meth)acrylates, polyurethane (meth)acrylates, polyester (meth)acrylates, unsaturated polyesters, polyether (meth)acrylates, silicone (meth)acrylates, epoxy (meth)acrylates, amino (meth)acrylates and melamine (meth)acrylates. The number average molar mass Mn of these compounds may, for example, be from 500 to 10000 g/mol, preferably from 500 to 5000 g/mol. The binders may be used individually or as a mixture.

Compounds which contain free-radically polymerizable double bonds in the form of the preferred (meth)acryloyl groups may be produced in accordance with conventional methods. This may proceed, for example, by: transesterifying OH-functional resins, such as, OH-functional polyesters, polyacrylates, polyurethanes, polyethers or epoxy resins, with alkyl esters of (meth)acrylic acid; esterifying the stated OH-functional resins with (meth)acrylic acid; reacting the stated OH-functional resins with isocyanate-functional (meth)acrylates; reacting acid-functional resins, such as polyesters, polyacrylates, polyurethanes with epoxy-functional (meth)acrylates; reacting epoxy-functional resins, such as polyesters, polyacrylates, epoxy resins with (meth)acrylic acid. These production methods stated by way of example are described in the literature and known to the person skilled in the art.

The (meth)acryloyl-functional prepolymers may be used in combination with reactive diluents, i.e., free-radically polymerizable low molecular weight compounds with a molar mass of below 500 g/mol. The reactive diluents may be mono-, di- or polyunsaturated. Examples of monounsaturated reactive diluents are (meth)acrylic acid and the esters thereof, maleic acid and the semi-esters thereof, vinyl acetate, vinyl ether, substituted vinyl ureas, styrene, vinyltoluene. Examples of diunsaturated reactive diluents are di(meth)acrylates, such as, alkylene glycol di(meth)acrylate, polyethylene glycol di(meth)acrylate, 1,3-butanediol di(meth)acrylate, vinyl (meth)acrylate, allyl (meth)acrylate, divinylbenzene, dipropylene glycol di(meth)acrylate, hexanediol di(meth)acrylate. Examples of polyunsaturated reactive diluents are glycerol tri(meth)acrylate, trimethylolpropane tri(meth)acrylate, pentaerythritol tri(meth)acrylate, pentaerythritol tetra(meth)acrylate. The reactive diluents may be used alone or in mixture.

Binders with hydrolysable alkoxysilane groups which may be considered are those conventional binders known to the person skilled in the art which may be functionalized with alkoxysilane groups. The alkoxysilane groups may comprise monoalkoxysilane, dialkoxysilane and/or trialkoxysilane groups. Trialkoxysilane groups are preferred. The alkoxysilane groups comprise, for example, 1-10, preferably, 1-3 C atoms in the alkoxy residue.

The binders bearing alkoxysilane groups may be produced, for example, by: copolymerizing alkoxysilane-functional (meth)acrylate monomers or by copolymerizing vinylalkoxysilanes; reacting OH-functional resins, such as, OH-functional polyesters, polyacrylates, polyurethanes, polyethers or epoxy resins with isocyanate-functional alkoxysilanes; reacting epoxy-functional resins with aminoalkoxysilanes; reacting acid-functional resins with epoxy-functional alkoxysilanes; reacting isocyanate-functional resins (for example, polyurethanes, polyesterurethane prepolymers, polyetherurethane prepolymers, acrylate copolymers with free NCO groups) with aminoalkoxysilanes; reacting isocyanate-functional resins with OH-functional alkoxysilanes produced in situ, for example, by addition of aminoalkoxysilanes onto cyclic carbonates. The particular reaction must be performed with exclusion of water in order to suppress premature hydrolysis of the alkoxysilane groups.

Binders bearing both olefinic double bonds, in particular (meth)acryloyl groups, and hydrolysable alkoxysilane groups which may be considered are those conventional binders known to the person skilled in the art which may be functionalized with (meth)acryloyl groups and alkoxysilane groups. These resins may, for example, be produced as follows:

(Meth)acryloyl groups, such as those described above, are first incorporated into an appropriate resin. Residual OH groups may then be reacted with isocyanate-functional alkoxysilanes or residual epoxy groups may be reacted with aminoalkoxysilanes or some of the acryloyl groups may be reacted with aminoalkoxysilanes.

The preparation of binders bearing both olefinic double bonds, in particular (meth)acryloyl groups, and hydrolysable alkoxysilane groups shall be described in more detail for polyurethanes as an example. The polyurethane binders with free-radically polymerizable olefinic double bonds in the form of (meth)acryloyl groups and with hydrolysable alkoxysilane groups may be produced by various methods. According to a first variant, (meth)acryloyl-functional polyurethanes are first produced, into which alkoxysilane groups are subsequently introduced. According to a second variant, polyurethanes containing alkoxysilane groups are first produced and (meth)acryloyl groups are then introduced into these polyurethanes. Both production variants will be described in greater detail below.

According to variant 1, (meth)acryloyl-functional polyurethanes are first produced using conventional methods. This may, for example, proceed by: transesterifying OH-functional polyurethanes with alkyl esters of (meth)acrylic acid; esterifying OH-functional polyurethane resins with (meth)acrylic acid; reacting OH-functional polyurethane resins with isocyanate-functional (meth)acrylates or reacting acid-functional polyurethanes with epoxy-functional (meth)acrylates. The hydrolysable alkoxysilane groups are then introduced.

Functionalization of the polyurethane (meth)acrylates with hydrolysable alkoxysilane groups may, for example, proceed by reacting residual OH groups in the polyurethane (meth)acrylate with isocyanate-functional alkoxysilanes or reacting residual epoxy groups with aminoalkoxysilanes or reacting some of the acryloyl groups with aminoalkoxysilanes.

For example, polyisocyanates may be reacted with hydroxyalkyl (meth)acrylates, the isocyanate groups being completely consumed, and the aminoalkoxysilanes may then be added to some of the double bonds by Michael addition. Some of the isocyanate groups of a polyisocyanate may also be reacted with hydroxyalkyl (meth)acrylates and the aminoalkoxysilane may then be added to the residual isocyanate groups.

According to variant 2, compounds comprising alkoxysilane groups are first produced and (meth)acryloyl groups are then introduced. This may, for example, proceed by reacting an alkyl (meth)acrylate with a primary aminoalkoxysilane by Michael addition to yield the secondary aminoalkoxysilane and then performing a reaction with polyisocyanates to yield an NCO-functional prepolymer. The prepolymer containing NCO may then be reacted with hydroxyalkyl (meth)acrylates. Similarly, it is also possible in the first step to react a primary aminoalkoxysilane with a cyclic carbonate to yield the OH-functional alkoxysilane, which latter is then further reacted with polyisocyanate and hydroxyalkyl (meth)acrylates. It is also possible initially to react polyisocyanates with secondary aminoalkoxysilanes and then further to react residual isocyanate groups with hydroxyalkyl (meth)acrylates.

Variant 2 for the production of the polyurethane binder is preferably used.

The equivalent ratio of free-radically polymerizable olefinic double bonds to hydrolysable alkoxysilane groups (mono-, di- and trialkoxysilane groups are in each case calculated as one equivalent) in the binder system may be, for example, 1:0.1 to 1:5, preferably 1:0.2 to 1:4.

The binders with free-radically polymerizable olefinic double bonds and/or hydrolysable alkoxysilane groups may furthermore additionally contain hydroxyl groups. The hydroxyl groups may be obtained or introduced using measures known to the person skilled in the art. For example, the hydroxyl groups may be introduced by reacting NCO groups still present in the binders with polyols. The additionally present hydroxyl groups have a catalytic action on moisture curing and can also react with the alkoxysilane groups under a condensation reaction.

Free-radical inhibitors may be added to the binders in order to prevent premature polymerization of the double bonds present. Examples of free-radical inhibitors are hydroquinone, 4-methoxyphenol, 2,6-di-tert.-butyl-4-methylphenol, phenothiazine, 3,5-di-tert.-butyl-4-hydroxyanisole, 2-tert.-butyl-4-hydroxyanisole, 3-tert.-butyl-4-hydroxyanisole, p-benzoquinone.

The coating compositions curable by means of thermal energy and by means of moisture which are usable in the process, according to the invention, may be liquid or powder coating compositions. The liquid coating compositions may contain organic solvents. The organic solvents optionally present in the liquid coating compositions comprise conventional coating solvents.

It is preferred that the liquid coating compositions contain 10-60 wt.%, preferably 15-45 wt.%, relative to the complete coating composition, of at least one polar, water-miscible, organic solvent with a water solubility at 20°C of at least 220 g/I. The proportion of polar, water-miscible, organic solvents with a water solubility at 20°C of at least 220 g/I may be, for example, 50-100 wt.%, relative to the entire quantity of organic solvents present in the coating composition. Examples of polar, water-miscible, organic solvents with a water solubility at 20°C of at least 220 g/I are N-methylpyrrolidone, dimethylformamide; ether esters such as, for example, ethylene glycol monomethyl ether acetate, alcohols, for example, alkanols, such as methanol, ethanol, propanol; glycols, such as ethylene glycol, propylene glycol, diethylene glycol, dipropylene glycol, triethylene glycol, tripropylene glycol; glycol ethers, such as ethylene glycol monomethyl ether, ethylene glycol monoethyl ether, ethylene glycol isopropyl ether, ethylene glycol monobutyl ether, diethylene glycol monomethyl ether, diethylene glycol monoethyl ether, diethylene glycol monobutyl ether, triethylene glycol monoethyl ether, triethylene glycol monobutyl ether, methoxypropanol, ethoxypropanol, propoxypropanol, propylene glycol dimethyl ether, dipropylene glycol dimethyl ether, diethylene glycol dimethyl ether, dipropylene glycol monomethyl ether, methoxybutanol and ethylene glycol monomethyl ether acetate, cyclic ketones, such as, butyrolactone. The corresponding solvents may be used individually or as a mixture. Preferred organic solvents are here those which are unlimitedly water-soluble at 20°C, i.e., which are unlimitedly water-miscible. It is preferably possible, for example, to use butyrolactone and glycol ethers, such as dipropylene glycol monomethyl ether and dipropylene glycol dimethyl ether as well as alcohols, such as, for example, isopropanol.

In order to initiate free-radical polymerization, the coating compositions may contain thermally activatable free-radical initiators which decompose at different temperatures, depending on the initiator type. Examples of such free-radical initiators include, organic peroxides, organic azo compounds or C-C-cleaving initiators, such as, dialkyl peroxides, peroxycarboxylic acids, peroxydicarbonates, peroxide esters, hydroperoxides, ketone peroxides, azodinitriles or benzopinacole silyl ethers. The free-radical initiators are preferably used in quantities of between 0.1 and 5 wt-%, relative to resin solids content. The thermal initiators may be used individually or in combination. The coating compositions do not contain photoinitiators.

The coating compositions may contain catalysts to catalyse moisture curing. Examples of such catalysts are Lewis bases, for example, cycloaliphatic amines, such as, diazabicyclooctane, diazabicycloundecene, and diazabicyclononene; aliphatic amines, such as, triethylamine, tripropylamine, diethanolamine, monoethanolamine, triethanolamine, diethylethanolamine, dimethylethanolamine, dipropylethanolamine, and dimethylisopropanolamine. Further examples of catalysts are organo tin compounds, such as, dibutyltin dilaurate, dibutyltin dioctoate and acid catalysts, such as, for example, formic acid, p-toluenesulfonic acid, dodecylbenzenesulfonic acid, dinonylnaphthalenedi- or -monosulfonic acid. The catalysts may be blocked, for example, blocked p-toluenesulfonic acid, dodecylbenzenesulfonic acid, dinonylnaphthalenedisulfonic acid or dinonylnaphthalenemonosulfonic acid. The catalysts may be used individually or in combination with one another.

The coating compositions curable by means of thermal energy and by means of moisture which are usable in the process, according to the invention, may comprise pigmented or unpigmented coating compositions for producing any desired layer of a multi-layer structure. Preferably, however, they comprise, as already described above, transparent clear coats, transparent sealing coats or pigmented one-layer top coats.

The coating compositions curable by means of thermal energy and by means of moisture used in the process according to the invention may contain transparent as well as color-imparting and/or special effect-imparting pigments and extenders. Suitable color-imparting pigments are any conventional coating pigments of an organic or inorganic nature. Examples of inorganic or organic color-imparting pigments are titanium dioxide, micronised titanium dioxide, iron oxide pigments, carbon black, azo pigments, phthalocyanine pigments, quinacridone or pyrrolopyrrole pigments. Examples of special effect-imparting pigments are metal pigments, for example, made from aluminum, copper or other metals; interference pigments, such as, for example, metal oxide coated metal pigments, for example, titanium dioxide coated or mixed oxide coated aluminum, coated mica, such as, for example, titanium dioxide coated mica and graphite effect pigments. Soluble dyes may also be present. Examples of usable extenders are silicon dioxide, aluminum silicate, barium sulfate, calcium carbonate and talcum.

In addition to the already stated initiators, inhibitors and catalysts, the coating composition may contain further conventional coating additives. Examples of further conventional coating additives are levelling agents, rheological agents, such as, highly disperse silica or polymeric urea compounds, thickeners, for example, based on partially cross-linked, carboxy-functional polymers or on polyurethanes, defoamers, wetting agents, anticratering agents, degassing agents, antioxidants and light stabilizers based on HALS (hindered amine light stabilizers) products and/or UV absorbers. The additives are used in conventional amounts known to the person skilled in the art.

The coating compositions may be formulated as single-component or two-component coating compositions, depending upon whether a blocked or unblocked catalyst is used for moisture curing. If an unblocked catalyst is used, the binders curable by means of high energy radiation and by means of moisture, i.e., at least the binders with the hydrolysable alkoxysilane groups, are present in one component and the unblocked catalyst is present in a second component. If a blocked catalyst is used, the coating compositions may be provided as a single-component formulation without any need to prepare a second component.

A further method of producing coating agents consists in using a water-containing component as the second component, so moisture curing can take place independently of the ambient conditions, in particular, the atmospheric moisture, during application of the coating agents. The water-containing component may also, if desired, contain the catalyst, preferably the unblocked catalyst and/or the above-mentioned organic solvents.

According to a first preferred embodiment, the coating composition based on a binder system curable by means of thermal energy and by means of moisture that is used in the process according to the invention is a clear coating composition that is applied onto a pigmented base coat layer to produce a clear coat layer.

According to a second preferred embodiment, the coating composition based on a binder system curable by means of thermal energy and by means of moisture that is used in the process according to the invention is a one-layer top coat composition that is applied onto a substrate coated with one or more coating layers, for example, with a primer and/or surfacer layer, to produce a pigmented top coat layer.

According to a third preferred embodiment, the coating composition based on a binder system curable by means of thermal energy and by means of moisture is used in the process according to the invention to produce an outer transparent sealing layer.

In the process according to the invention, the coating compositions may be applied using known methods, preferably by means of spraying.

Substrates which may be used are the various materials used in vehicle construction, for example, metals, such as, iron, zinc, aluminum, magnesium, stainless steel or the alloys thereof or plastics, such as, polyurethanes, polycarbonates or polyolefins.

When applying the coating compositions based on a binder system curable by means of thermal energy and by means of moisture, it is, for example, possible to proceed in such a manner that the corresponding coating composition is initially applied onto the particular substrate, wherein application may be followed by flashing-off, for example, within a period of 5 to 40 minutes, at 20 to 60°C. After the optional intermediate flash-off phase, curing with thermal energy can proceed.

Thermal energy may be supplied to the coating in various ways. Supply of thermal energy may proceed using a single method or a combination of two or more conventional methods, for example, by radiant heating by means of infrared and/or near infrared irradiation and/or by convection, for example, by means of hot air and/or by induction heating (in the case of metallic substrates). Preferred methods are infrared irradiation, near infrared irradiation and supply by convection heating. Thermal energy may be supplied in known manner, for example, in an oven or in a conveyor unit.

Conventional infrared radiation emitters and near infrared radiation emitters may be considered as radiation sources for the preferred infrared irradiation and near infrared irradiation. The infrared radiation emitters preferably comprise infrared radiation emitters that emit radiation in the short wavelength infrared range, for example, between 0.8 and 2 µm, or infrared radiation emitters that emit radiation in the medium wavelength infrared range, for example, between 2 and 4 µm. The infrared radiation emitter or emitters may be positioned in front of the substrate surface to be irradiated, for example, at a distance of 20 to 70 cm. The irradiation time with infrared radiation may amount, for example, to 1 to 30 minutes.

The near infrared radiation emitters to be used comprise such radiation emitters which emit short wavelength infrared radiation of the wavelength range from approx. 760 to approx. 1500 nm; preferably, 760 to 1200 nm. Such NIR radiation emitters are commercially available from Adphos. They are, for example, high-performance halogen radiation emitters with an intensity (radiation output per unit area) of generally greater than 10 kW/m² to, for example, 15 MW/m², preferably, between 100 kW/m² and 800 kW/m². For example, the radiation emitters reach a radiation emitter surface temperature (coil filament temperature) of more than 2000 K, preferably, more than 2900 K, for example, a temperature from 2000 to 3500 K. Suitable radiation emitters have, for example, an emission spectrum with a maximum between 750 and 1200 nm.

The distance between the object and NIR radiation emitter may be, for example, 2 to 60 cm, the irradiation time may be, for example, from 1 to 300 s. The irradiation time refers either to the duration of continuous irradiation or to the sum of the periods of different irradiation cycles. By selecting the various parameters in a controlled manner, different surface temperatures may be obtained, for example, surface temperatures from 80 to 250°C. The surface temperatures also may, however, be over 250°C.

Curing may generally be effected by the action of thermal energy at temperatures of, for example, 80 to 180°C, preferably at 80 to 130°C (object temperature in each case). The curing times here may be, for example, 10 to 40 minutes. If the above-mentioned first embodiment is adopted, the clear lacquer layer may be applied to the base coat layer by the conventional wet-in-wet method, and the two layers can be cured together by means of thermal energy.

Curing under the reaction of moisture is carried out by exposure to conditions of sufficient moisture, e.g., by exposure to humidity. The moisture curing reaction can be carried out at a relative humidity in the range of, for example, 10-90%, preferably, 20-80%. It is also possible, as already described above, to add small quantities of water to the coating composition with a second component.

The process according to the invention may be used in industrial and vehicle coating, in particular, in vehicle original coating and in vehicle repair coating.

The resistance to yellowing and the freedom from forming fissures in the coatings obtained are advantageous in comparison to the use of UV-curable systems, and the relatively short curing times and the possibility for use as a one-pack coating system is advantageous in comparison to the use of conventional thermally curable systems.

The following Examples are intended to illustrate the invention in greater detail. The following abbreviations have been used: pbw means parts by weight, and wt-% means weight percent.

### Examples

### Example 1

### Production of alkoxysilane-functional urethane acrylates A)

478 pbw of hexamethylene diisocyanate biuret (75%, Tolonate® HDB/75 from Rhodia), 8 pbw of neopentyl glycol and 30 pbw of butyl acetate were initially introduced into a 2 liter, four-necked flask fitted with a stirrer, thermometer and column. The reaction mixture was heated to a maximum of 60°C. 235 pbw of a secondary aminoalkoxysilane (Silquest® A 1170, Witco) were then apportioned in such a manner that the temperature did not exceed 80°C. Rinsing was performed with 40 pbw of butyl acetate. Once an NCO value of < 5.9 % had been reached, 0.6 pbw of methylhydroquinone and 0.5 pbw of dibutyltin dilaurate solution (10%) were added. 149 pbw of butanediol monoacrylate were then apportioned in such a manner that the temperature did not exceed 80°C. The reaction mixture was stirred and the temperature was not allowed to exceed a maximum of 80°C until an NCO value was no longer detectable. The mixture was then diluted with 60 pbw of butyl acetate.

A colorless resin solution was obtained with a solids content of 72.3% (1 h/150°C), a viscosity of 1840 mPas (Höppler, 25°C), a calculated double bond equivalent weight of 725 and a calculated content of silicon bound in alkoxysilane groups of 5,1 wt-%, relative to resin solids content.

### Example 2

### Production of alkoxysilane-functional urethane acrylates B)

529 pbw of hexamethylene diisocyanate biuret (75%, Tolonate® HDB/75 from Rhodia), 9 pbw of neopentyl glycol and 20 pbw of butyl acetate were initially introduced into a 2 liter, four-necked flask fitted with a stirrer, thermometer and column. The reaction mixture was heated to a maximum of 60°C. 179 pbw of a secondary aminoalkoxysilane (Dynasilan® 1189, Degussa) were then apportioned in such a manner that the temperature did not exceed 80°C. Rinsing was performed with 40 pbw of butyl acetate. Once an NCO value of <6.3 % had been reached, 0.6 pbw of methylhydroquinone and 0.5 pbw of dibutyltin dilaurate solution (10%) were added. 165 pbw of butanediol monoacrylate were then apportioned in such a manner that the temperature did not exceed 80°C. The reaction mixture was stirred and the temperature was not allowed to exceed a maximum of 80°C until an NCO value was no longer detectable. The mixture was then diluted with 57 pbw of butyl acetate.

A colorless resin solution was obtained with a solids content of 73.2% (1 h/150°C), a viscosity of 2660 mPas (Höppler, 25°C), a calculated double bond equivalent weight of 655 and a calculated content of silicon bound in alkoxysilane groups of 2,8 wt-%, relative to resin solids content.

### Example 3

### Production of alkoxysilane-functional urethane acrylates C)

121 pbw of a primary aminoalkoxysilane (Dynasilan® AMMO, Degussa) were reacted with 86 pbw of butyl acrylate in 35 pbw of butyl acetate in a 2 liter, four-necked flask fitted with a stirrer, thermometer and column. Once the exothermic reaction had subsided, 515 pbw of hexamethylene diisocyanate biuret (75%, Tolonate® HDB/75 from Rhodia) and 3.5 pbw of butyl acetate were added. At a maximum temperature of 80°C, the reaction was continued until an NCO value of 7.15% was reached. The reaction mixture was then combined with 0.6 pbw of methylhydroquinone and 0.5 pbw of dibutyltin dilaurate (as 10% solution). 156 pbw of hydroxyethyl acrylate were then apportioned in such a manner that the temperature did not exceed 80°C. The reaction mixture was stirred and not allowed to exceed a maximum of 80°C until an NCO value was no longer detectable. The mixture was then diluted with 51 pbw of butyl acetate.

A colorless resin solution was obtained with a solids content of 70.0% (1h/150°C), a viscosity of 1065 mPas (Höppler, 25°C), a calculated double bond equivalent weight of 558 and a calculated content of silicon bound in alkoxysilane groups of 2,5 wt-%, relative to resin solids content.

### Example 4

### Production of dear coats

Clear coats 1-3 usable in the process according to the invention were formulated from the following constituents:
Clear coat 1 (single-component):
   70.0 wt-% of urethane acrylate resin A from Example 1
   0.6 wt-% of Tinuvin® 400/85 (UV absorber; CIBA)
   0.3 wt-% of Byk 341/52 (levelling agent; Byk)
   1.2 wt-% of VAZO® 88 (thermal Azo-initiator from E.I. DuPont de Nemours and Company; Wilmington Delaware)
   2.0 wt-% of Nacure® 2500 (p-toluenesulfonic acid based catalyst, blocked; King Industries)
   25.9 wt-% of Solvesso® 100 (mixture of aromatic hydrocarbons)
Clear coat 2 (single-component):
   70.0 wt-% of urethane acrylate resin B from Example 2
   0.6 wt-% of Tinuvin® 400/85 (UV absorber; CIBA)
   0.2 wt-% of Tego Rad 2100 (levelling agent; Tego Chemie Service GmbH)
   1.2 wt-% of VAZO® 88 (thermal Azo-initiator;)
   0.5 wt-% of DBTL (dibutyltin dilaurate; catalyst)
   27.5 wt-% of Solvesso® 100 (mixture of aromatic hydrocarbons)
Clear coat 3 (two-component)
   Component 1:
      70.0 wt-% of urethane acrylate resin C from Example 3
      0.5 wt-% of Sanduvor® 3206 (UV absorber; CIBA)
      0.3 wt-% of Tego Rad 2100 (levelling agent; Tego Chemie Service GmbH)
      1.2 wt-% of VAZO® 88 (thermal Azo-initiator)
      31.1 wt-% of Solvesso® 100 (mixture of aromatic hydrocarbons)
   Component 2 (catalyst):
      90.0 wt-% of xylene
      10.0 wt-% of p-toluenesulfonic acid

100 pbw of component 1 were mixed shortly before application with 5 pbw of component 2.

Clear coats 1-3 produced above were adjusted to spraying viscosity (24 seconds, flow cup 4) with Solvesso® 100.

### Application and curing of clear coats 1-3

The clear coats 1-3 produced above were applied to a dry film thickness of approximately 35 µm onto steel sheets coated with conventional commercial electro-dipcoating, surfacer and base coat (flashed off). After flashing off for 10 minutes at room temperature, the coating has been cured for 10 minutes at 120°C (circulating air oven).

The following table shows the technical properties of the resultant coatings.

| | Coating 1 | Coating 2 | Coating 3 |
|---|---|---|---|
| Indentation (mm) | 7.5 | 8.0 | 7.5 |
| Scratch resistance (Amtec) | 50 | 45 | 50 |
| Xylene test | OK | OK | OK |
| Acid test | 12 | 11 | 10 |
| Constant climate test | 0/0 | 0/0 | 0/0 |

Finishes 1 to 3 show no yellowing after thermal curing.

The finishes obtained, according to the invention, were resistant to yellowing and exhibited adequate hardness and high crosslinking, the latter being demonstrated, in particular, by the xylene test. These results could even be achieved with a hardening time of only 10 minutes at 120°C.

### Test methods:

### Indentation to DIN EN ISO 1520, value in millimetres

Amtec scratch resistance, stated as residual gloss after reflow in %. Residual gloss was measured in % (ratio of initial gloss of the clear coat surface to its gloss after wash scratching, gloss measurement in each case being performed at an angle of illumination of 20°). Wash-scratching was performed using an Amtec Kistler laboratory car wash system (c.f. Th. Klimmasch and Th. Engbert, Entwicklung einer einheitlichen Laborprüfmethode für die Beurteilung der Waschstraßenbeständigkeit von Automobil-Decklacken [development of a standard laboratory test method for evaluating resistance of automotive top coats to car wash systems], in DFO proceedings 32, pages 59 to 66, technology seminars, proceedings of the seminar on 29-30.4.97 in Cologne, published by Deutsche Forschungsgesellschaft für Oberflächenbehandlung e.V., Adersstraße 94, 40215 Düsseldorf).

### Xylene test:

Brief description: A xylene-soaked filter paper is placed on the coating film for 10 minutes. Evaluation: OK = no visible change

### Acid test:

Brief description: at 65°C, 50 µl drops of 36% sulfuric acid are placed at 1 minute intervals for 30 minutes onto the coating film.
Evaluation: Destruction of the film after X minutes (0-30)
Constant climate test:
to DIN 50017, evaluation: degree of blistering m/g to DIN 53209

## Claims

1. A process for multi-layer coating of substrates which comprises the steps of applying at least two coating layers and curing of the applied coatings;
wherein at least one of the coating layers is formed from a coating composition comprising a binder system of resin solids wherein the resin has free-radically polymerizable olefinic double bonds and hydrolysable alkoxysilane groups, wherein the resin solids content of the coating composition has an equivalent weight of C=C double bonds of 200 - 2000 and has a silicon content of 1 - 10 wt-%, wherein the silicon is bound in alkoxysilane groups and wherein the step of curing of the at least one coating layer comprises exposure to thermal energy thereby polymerizing the C=C double bonds via free radical polymerization and exposure to moisture thereby forming siloxane bridges from the alkoxysilane groups.

2. A process according to claim 1, wherein the coating composition comprising a binder system of resin solids having free-radically polymerizable olefinic double bonds and hydrolysable alkoxysilane groups is applied onto a pigmented base coat layer and cured to form a clear coat layer.

3. A process according to claim 1, wherein the coating composition comprising a binder system of resin solids having free-radically polymerizable olefinic double bonds and hydrolysable alkoxysilane groups and being pigmented is applied as a one-layer top coat composition onto a substrate selected from the group consisting of a primer layer, a surfacer layer and a primer/surfacer layer and cured to form a pigmented one-layer top coat layer.

4. A process according to claim 1, wherein the coating composition with a binder system of resin solids having free-radically polymerizable olefinic double bonds and hydrolysable alkoxysilane groups is applied as a transparent sealing coat onto a multi-layer coating to form an outer transparent sealing layer.

5. A process according to claim 1, wherein the resin solids content of the coating composition comprises resins having free-radically polymerizable olefinic double bonds and hydrolysable alkoxysilane groups, an equivalent weight of C=C double bonds of 300 - 1500, and a silicon content of 1 - 7 wt-% wherein the silicon is bound in alkoxysilane groups.

6. A process according to claim 1, wherein the alkoxysilane groups comprise trialkoxysilane groups.

7. A process according to claim 1, wherein the binder system with free-radically polymerizable olefinic double bonds and with hydrolysable alkoxysilane groups additionally comprises hydroxyl groups.

8. A process according to claim 1, wherein the binder system with free-radically polymerizable olefinic double bonds and with hydrolysable alkoxysilane groups comprises polyurethanes with (meth)acryloyl groups and hydrolysable alkoxysilane groups.

9. A process according to claim 1, wherein the thermal energy is applied by a method selected from the group consisting of action of infrared radiation, action of near-infrared radiation, action of convection heat and combinations thereof.

10. A process according to claim 1, which comprises a process for the multi-layer coating of vehicles and vehicle parts.
